# EUROPÄISCHE PATENTSCHRIFT

(11) **EP 2 988 916 B1**
(45) Veröffentlichungstag und Bekanntmachung des Hinweises auf die Patenterteilung: **03.04.2019**
(21) Anmeldenummer: 14723372.0
(22) Anmeldetag: 28.04.2014
(51) Int. Cl.: B29C 45/78, B29C 47/78, B29C 47/18

(54) **SPRITZGIESSMASCHINE MIT EINER IM BEREICH DER EINFÜLLZONE ANGEORDNETEN LUFTGEBLÄSEKÜHLEINRICHTUNG**
INJECTION MOULDING DEVICE, WITH AN AIR BLAST COOLING UNIT IN THE SCREW INLET AEREA
DISPOSITIF DE MOULAGE PAR INJECTION AVEC UNE ENTITÉ DE REFROIDISSEMENT EN L'AIR

(30) Priorität: 26.04.2013 DE 102013207632
(43) Veröffentlichungstag der Anmeldung: 02.03.2016
(73) Patentinhaber: Sumitomo (SHI) Demag Plastics Machinery GmbH, 90571 Schwaig (DE)
(72) Erfinder: GRUNITZ, Otto, Shanghai 201108 (CN); LANG, Stefan, 92358 Batzhausen (DE)
(74) Vertreter: Hübner, Gerd
(86) Internationale Anmeldenummer: PCT/EP2014/058577
(87) Internationale Veröffentlichungsnummer: WO 2014/174112

(56) Entgegenhaltungen:
- JP-A- H0 655 588
- JP-A- H04 316 823
- JP-A- H08 156 062
- JP-A- 2008 290 464
- JP-A- 2010 260 297

## Beschreibung

Die Erfindung betrifft eine Kunststoffverarbeitungsmaschine und insbesondere eine Spritzgießmaschine mit den im Oberbegriff des Patentanspruches 1 angegebenen Merkmalen.

Letztere umreißen den üblichen Aufbau einer Spritzgießmaschine mit ihrem Plastifizierzylinder, im Bereich dessen Einfüllzone das zu plastifizierende Kunststoffmaterial in den Innenraum des Plastifizierzylinders eingebracht wird. Daran schließt sich eine Plastifizierzone an, in der das eingefüllte Material mit Hilfe einer bei der vorliegenden Erfindung nicht relevanten Schneckenanordnung erhitzt, aufgeschmolzen, durch entsprechende Einrichtungen am Plastifizierzylinder - beispielsweise durch Entgasung - gereinigt, homogenisiert und schließlich für das Einspritzen in ein Spritzgießwerkzeug aufdosiert wird. Um die thermischen Verhältnisse in dieser Plastifizierzone gezielt beeinflussen zu können, ist in deren Bereich eine Heizeinrichtung für das Kunststoffmaterial vorgesehen, die in aller Regel aus in Abschnitten entlang der Plastifizierzone angeordneten Mantelheizungen besteht.

Da im Bereich der Einfüllzone das Kunststoffmaterial zur Erhaltung seiner Transport-, also insbesondere Rieselfähigkeit, nicht anschmelzen darf, sind Maßnahmen notwendig, um die Einfüllzone auf einer bestimmten Temperatur unterhalb der Temperatur in der Plastifizierzone zu halten. Hierfür ist eine Temperiereinrichtung für das einzufüllende Kunststoffmaterial vorgesehen.

Aus dem Stand der Technik - beispielsweise aus der EP 1 488 907 A2 - ist es bekannt, eine flüssigkeitsbasierte Temperier- und insbesondere Kühleinrichtung im Bereich der Einfüllzone vorzusehen. Die Wand des Plastifizierzylinders ist in der Einfüllzone dazu mit Kühlkanälen versehen, durch die Kühlflüssigkeit, insbesondere Wasser, geleitet wird. Durch Einstellung einer entsprechenden Durchströmung von Wasser kann die Einfüllzone mit dem darin transportierten Kunststoffmaterial auf einer bestimmten Temperatur gehalten werden.

Bekannt sind im Zusammenhang mit solchen Wasserkühlungen offene und geschlossene Kühlkreisläufe. Letztere können beispielsweise auch mit Öl als Kühlmedium betrieben werden, sind aber aufgrund dieses Flüssigkeitstyps aufwändig.

Die wasserbasierten Temperiereinrichtungen weisen verschiedene Nachteile auf. So ist dieses Kühlmittel grundsätzlich in einer bestimmten Qualität, insbesondere Reinheit, einzusetzen, da bei Verwendung mit Verunreinigungen versetzten Wassers Verstopfungen im Kühlkreislauf der Maschine drohen. Oftmals steht am Aufstellort der Kunststoffverarbeitungsmaschine ausreichend sauberes Wasser nicht zur Verfügung, so dass aufwändige Reinigungsmaßnahmen für das einzusetzende Kühlwasser zum Betrieb der Spritzgießmaschine notwendig sind.

Offene Kühlkreisläufe sind vom ökonomischen Standpunkt her nachteilig. Unter ökologischen Gesichtspunkten stellt dies eine ausgesprochene Was-Die Realisierung einer wasserbasierten Temperiereinrichtung erfordert ferner eine oft aufwändige Verschlauchung an der Maschine und eine Wasserversorgung am Standort der Maschine in der Produktionshalle, was zusätzlichen Infrastrukturaufwand für die Produktionsanlage bedeutet.

Bei einer starken Erwärmung des Kühlmittels Wasser kann dessen unkontrollierte Verdampfung drohen, was ein relevantes Unfallrisiko beispielsweise durch Verbrühungen bei Dampfaustritt mit sich bringt.

Schließlich erfordert die parallele Verwendung eines wasserbasierten Systems und der in aller Regel elektrisch betriebenen Mantelheizung am Plastifizierzylinder spezielle Sicherheitsmaßnahmen gegen Berührung und Kurzschluss bei einer Leckage des wasserbasierten Kühlsystems.

Aus den Druckschriften JP H08 156062 A, JP 2010-260297 A und JP 2008290464 A sind bereits Kühleinrichtungen für die Einfüllzone von Plastizifierzylindern bekannt, bei denen Luft als Kühlmedium mit Gebläseunterstützung um die Einfüllzone zirkuliert wird. Bei der Kühlvorrichtung der erstgenannten Druckschrift sind dabei zur Effizienzverbesserung Kühlrippen um den Materialblock in der Einfüllzone angeordnet, allerdings ist die Luftkühlung mit einer Wasserkühlung kombiniert, sodass die oben stehenden Nachteile für diese Temperiereinrichtung immer noch gelten.

Die JP H04 316823 A zeigt einen Spritzgießzylinder mit einer wassergekühlten Einfüllzone. Bei der Einspritzeinheit gemäß JP H06 55588 A sind Luftkühlmanschetten für den gesamten Plastifizierylinder vorgesehen, die dessen Einfüllzone nicht gesondert zugeordnet sind.

Ausgehend von den geschilderten Problemen des Standes der Technik liegt der Erfindung die Aufgabe zugrunde, eine Kunststoffverarbeitungsmaschine mit einer Temperiereinrichtung für die Einfüllzone zu schaffen, die ohne flüssigkeitsbasiertes Kühlmittel auskommt, wodurch die damit verbundenen Nachteile dieses Kühlmittels vermieden werden, und wobei ferner eine effizienzverbesserte Kühlung erzielt wird.

Die Lösung dieser Aufgabe ist im Anspruch 1 angegeben und sieht als grundsätzliche Konzeption vor, dass die Temperiereinrichtung der Einfüllzone als Gebläse-Luftkühleinrichtung ausgebildet ist.

Aufgrund der erfindungsgemäßen Abkehr von flüssigkeitsbasierten Temperiermaßnahmen und der Hinwendung zum problemlos verfügbaren Kühlmedium Luft werden alle eingangs genannten Merkmale von wassergekühlten Temperiereinrichtungen vermieden. Überraschenderweise genügt die Verwendung eines Gebläses für thermisch eher niedrig beaufschlagte Plastifizierzylinder für eine ausreichende Temperierung bzw. Kühlung der Einfüllzone aus.

Ein besonderes Problem bei Plastifizierzylindem stellt die schlechte Wärmeleitfähigkeit der in der Regel aus warmfesten Stählen bestehenden Wand dar. Um hier eine ausreichende Ableitung der Wärme zu erzielen, ist es erfindungsgemäß vorgesehen, Wärmeleitungselemente zur Abfuhr thermischer Energie aus der Wand des Plastifizierzylinders zu dessen Oberfläche hin vorzusehen.

Eine konstruktiv einfache Ausgestaltung dieser Wärmeleitungselemente stellen Wärmeleitungsstäbe aus einem gegenüber der Wärmeleitfähigkeit der Wand des Plastifizierzylinders thermisch besser leitfähigen Material dar. Diese Wärmeleitungsstäbe können beispielsweise aus Kupfer bestehen.

In den abhängigen Ansprüchen sind bevorzugte Weiterbildungen des erfindungsgemäßen Grundgedankens angegeben, die allein oder in Kombination einen Maßnahmenkatalog schaffen, auf dessen Basis Plastifizierzylinder entsprechend ihrer Temperatur-Auslegung mit einer funktionierenden Temperiereinrichtung auf Luftgebläse-Basis betrieben werden können.

So weist die Gebläse-Luftkühleinrichtung bevorzugtermaßen mindestens einen, vorzugsweise zwei der Einfüllzone zugeordnete Ventilatoren auf.

Die Kühlwirkung kann ferner durch ein in der Einfüllzone um den Plastifizierzylinder angeordnetes Kühlrippen-Paket unterstützt werden, das vom Luftstrom der Gebläse-Luftkühleinrichtung beaufschlagt wird.

Die Kühlung der Wärmeleitungsstäbe kann dadurch optimiert werden, dass sie mit ihren an der Oberfläche des Plastifizierzylinders oder darüber hinausstehenden Enden mit einem Kühlkörper verbunden sind, der vom Luftstrom der Gebläse-Luftkühleinrichtung beaufschlagt wird.

Eine weitere bevorzugte Ausführungsform der Erfindung sieht eine Aneinanderreihung dieser Wärmeleitungsstäbe in längsaxialer Richtung des Plastifizierzylinders vor, wobei die Wärmeleitungsstäbe in zwei diametral gegenüberliegenden Wandzonen in die Wand sehnenartig schneidenden Aufnahmebohrungen im Plastifizierzylinder eingebettet sind.

Eine kompakte, gleichzeitig aber wirkungsvolle konstruktive Ausgestaltung der Gebläse-Luftkühleinrichtung sieht zwei beiderseits der Einfüllzone diametral gegenüberliegende Ventilatoren vor, die eine quer zur längsaxialen Richtung des Plastifizierzylinders gerichtete Kühlluftströmung über die Einfüllzone und den entsprechenden Kühlkörper hinweg erzeugen.

Zur konstruktiv einfachen Ankopplung des üblicherweise bei einer Kunststoffverarbeitungsmaschine vorgesehenen Einfülltrichters für das zu plastifizierende Material ist gemäß einer weiteren Ausführungsform vorgesehen, die Einfüllzone des Plastifizierzylinders über ein durch die Gebläse-Luftkühleinrichtung verlaufendes Koppelrohr mit dem Einfüllrichter zu verbinden. Dieses Koppelrohr liegt damit ebenfalls in der Kühlluftströmung, wodurch eine Abfuhr thermischer Energie auch aus diesem Bereich durch die erfindungsgemäße Gebläse-Luftkühleinrichtung erzielbar ist.

Die gesamte Gebläse-Kühleinrichtung kann schließlich in einem um die Einfüllzone des Plastifizierzylinders herum angeordneten Gehäuse untergebracht sein, so dass eine entsprechend ausgerüstete Kunststoffverarbeitungsmaschine auch im Bereich der Einfüllzone einen aufgeräumten optischen Erscheinungscharakter bietet.

Zusammenfassend weist die erfindungsgemäße Spritzgießmaschine auf der Basis ihrer verschiedenen konstruktiven Ausgestaltungen eine Vielzahl von Vorteilen auf, die wie folgt aufzulisten sind:
- Es ist kein Kühlwasser notwendig, das erhöhten Reinheitsansprüchen genügen muss.
- Die mit der Kühlwasserversorgung notwendigen Wasserarmaturen, die aus einem Grobfilter, Feinfilter und Steuerventil bestehen, können entfallen.
- Es ist keine oder zumindest nur eine reduzierte Wasserverschlauchung an der Maschine notwendig.
- Ein überproportional konstruktiver Aufwand bei Kühlwasserversorgungen von sogenannten "Multimaschinen", bei denen mehrere Plastifiziereinheiten an einer Spritzgießmaschine installiert sind, wird vermieden.
- Eine Unfallgefahr bei Überhitzung und Dampfaustritt aus Leckagen wird vermieden.
- Der äußere Kühlkörper der Luftkühlung sorgt bei einem Ausfall der Ventilatoren für eine Notkühlung auf der Basis von Konvektion.

Weitere Merkmale, Einzelheiten und Vorteile der Erfindung ergeben sich aus der nachfolgenden Beschreibung eines Ausführungsbeispiels anhand der beigefügten Zeichnungen. Es zeigen:

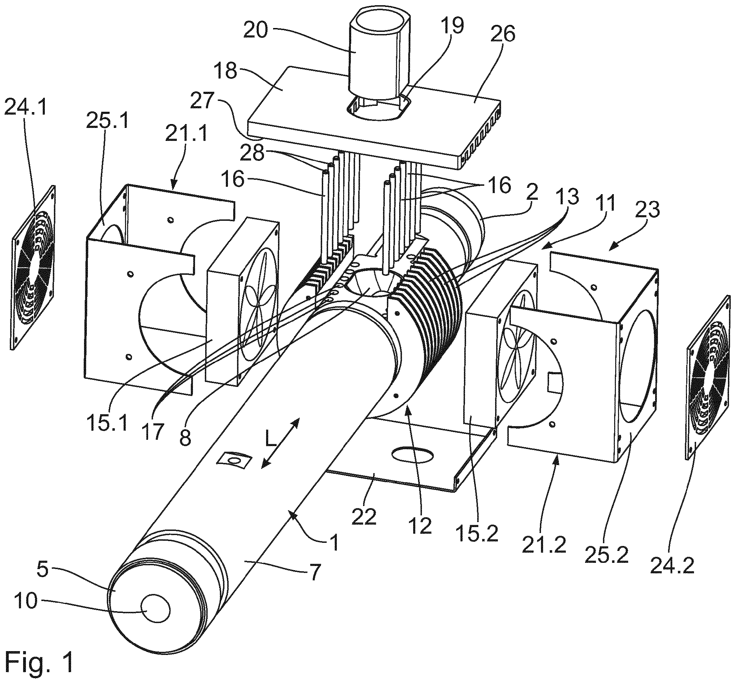

- Fig. 1: eine perspektivische Explosionsdarstellung eines Plastifizierzylinders mit Gebläse-Luftkühleinrichtung,
- Fig. 2: einen schematischen Längsaxialschnitt des Plastifizierzylinders, und
- Fig. 3: einen Radialschnitt der Einfüllzone des Plastifizierzylinders.

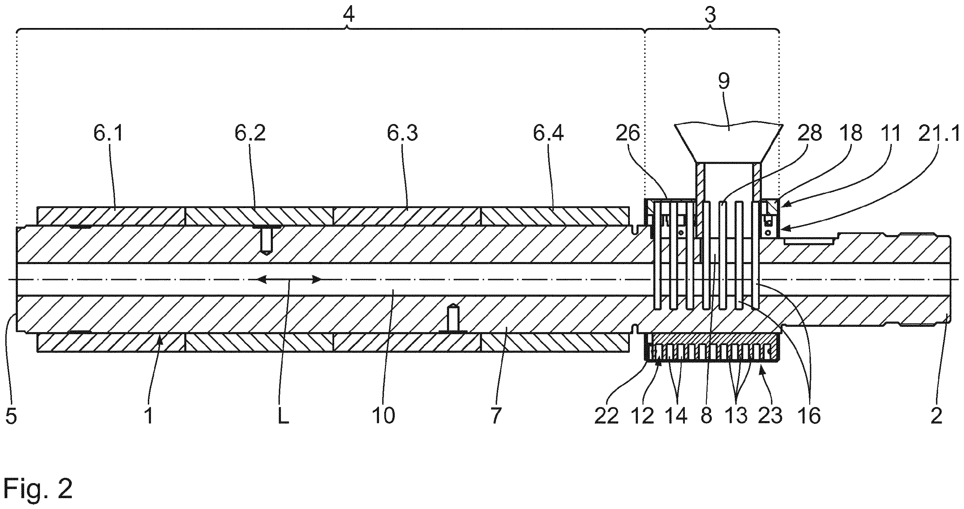

Wie aus den beigefügten Zeichnungen hervorgeht, weist eine in ihrer Gesamtheit nicht dargestellte Kunststoffverarbeitungsmaschine, insbesondere eine Spritzgießmaschine, einen Plastifizierzylinder 1 auf, der ausgehend von seinem rückwärtigen Ende 2 sich in eine Einfüllzone 3 und eine sich daran anschließende Plastifizierzone 4 gliedert (Fig. 2). Die am vorderen Ende 5 des Plastifizierzylinders 1 angeordnete Einspritzdüse ist in den beigefügten Zeichnungen nicht eigens dargestellt.

In der Plastifizierzone 4 sind mehrere nur in Fig. 2 schematisch angedeutete Mantelheizungen 6.1 bis 6.4 als Heizeinrichtung 6 auf der Wand 7 des Plastifizierzylinders 1 montiert. Diese in der Regel elektrisch betriebenen Mantelheizungen 6.1 bis 6.4 sind üblich und bedürfen keiner weiteren Erläuterungen.

In der Einfüllzone 3 ist die Wand 7 des Plastifizierzylinders 1 mit einer Einfüllöffnung 8 versehen, über die das in einem Einfülltrichter 9 vorgehaltene, granulatförmige Kunststoffmaterial in den Innenraum 10 des Plastifizierzylinders eingebracht werden kann. Wie der Übersichtlichkeit halber in den Zeichnungen weggelassen ist, ist in diesen Innenraum 10 die übliche Schneckenanordnung für den Transport des Kunststoffmaterials durch den Plastifizierzylinder 1 und dessen Aufbereitung darin angeordnet. Auch dies ist üblich und bedarf keiner weiteren Erörterungen.

Die Einfüllzone 3 ist schließlich mit einer Temperiereinrichtung in Form einer als Ganzes mit 11 bezeichneten Gebläse-Luftkühleinrichtung versehen, die für eine ausreichende Temperierung und insbesondere Kühlung des durch die Einfüllöffnung 8 einzubringenden Kunststoffmaterials sorgt. Damit wird verhindert, dass das Material aufgrund der thermischen Einflüsse von den Mantelheizungen 6.1 bis 6.4 im Bereich des Einfülltrichters 9 und der Einfüllöffnung 8 erweicht und damit seine Rieselfähigkeit verliert.

Die Gebläse-Luftkühleinrichtung 11 ist nun wie folgt zu erläutern:
Eine Hauptkomponente der Luftkühlung ist ein Kühlrippenpaket 12, das um die Einfüllzone 3 herum angeordnet und aus mehreren in längsaxialer Richtung L mit Abstand voneinander aneinandergereihten Ringblechen 13 besteht, die zwischen sich Strömungskanäle 14 bilden. Diametral gegenüberliegend sind jeweils Ventilatoren 15.1, 15.2 angeordnet, die gemeinsamen einen quer zur längsaxialen Richtung L gerichteten Luftstrom A erzeugen. Dieser beaufschlagt gleichermaßen das Kühlrippenpaket 12.

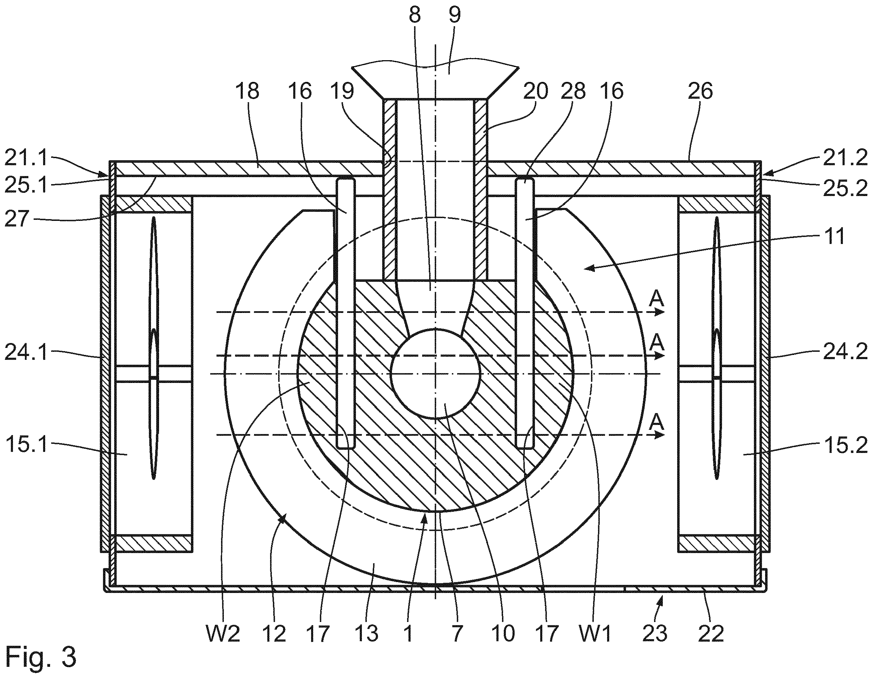

Wie insbesondere aus Fig. 3 deutlich wird, sind in der Wand 7 des Plastifizierzylinders 1 in der Einfüllzone 3 Wärmeleitungselemente in Form von Stäben 16 aus gut wärmeleitfähigem Kupfer vorgesehen, die in entsprechende Aufnahmebohrungen 17 in der Wand 7 der Einfüllzone 3 des Plastifizierzylinders 1 eingebettet sind. Diese Aufnahmebohrungen 17 sind als Sacklochbohrungen ausgeführt und in längsaxialer Richtung L aneinandergereiht. Die Wärmeleitungsstäbe 16 selbst stehen über die Aufnahmebohrungen 17 nach oben hinaus und sind mit ihren oberen Enden 28 mit einem plattenförmigen Kühlkörper 18 verbunden, der parallel zum Luftstrom A oberhalb der Einfüllzone 3 angeordnet ist. Wie aus Fig. 3 deutlich wird, schneiden die Aufnahmebohrungen 17 und damit die Wärmeleitungsstäbe 16 die Wand 7 des Plastifizierzylinders 1 sehnenartig in zwei diametral gegenüberliegenden Wandzonen W1, W2.

Der Kühlkörper 18 ist zentral mit einer Öffnung 19 versehen, durch die ein Koppelrohr 20 zwischen der Einfüllöffnung 8 und dem Einfülltrichter 9 hindurch läuft.

Der Kühlkörper 18 bildet zusammen mit zwei seitlichen Gehäusebacken 21.1, 21.2 und einem Bodenblech 22 das Gehäuse 23 für die Gebläse-Luftkühleinrichtung 11. Die Ver- und Entsorgung der Ventilatoren 15.1, 15.2 wird dabei über Lüftungsgitter 24.1, 24.2 in den in Querrichtung weisenden Schmalseiten 25.1, 25.2 der Gehäusebacken 21.1, 21.2 gewährleistet.

Die Kühlung des Kühlkörpers 18 erfolgt zum einen durch die Umgebung über dessen Oberseite 26 und zum anderen mit gesteigerter Wirkung durch den entlang seiner Unterseite 27 verlaufenden Kühlluftstrom A.

## Patentansprüche

1. Kunststoffverarbeitungsmaschine, insbesondere Spritzgießmaschine, mit einem Plastifizierzylinder (1), umfassend
- eine Einfüllzone (3), in der das zu plastifizierende Kunststoffmaterial in den Innenraum (10) des Plastifizierzylinders (1) eingebracht wird,
- eine sich der Einfüllzone (3) anschließende Plastifizierzone (4),
- einer im Bereich der Einfüllzone (3) angeordnete Temperiereinrichtung (11) für das einzufüllende Kunststoffmaterial, und
- eine im Bereich der Plastifizierzone (4) angeordnete Heizeinrichtung (6) für das Kunststoffmaterial,
- wobei die Temperiereinrichtung der Einfüllzone (3) als Gebläse-Luftkühleinrichtung (11) ausgebildet ist, und
- wobei in der Wand (7) des Plastifizierzylinders (1) im Bereich der Einfüllzone (3) Wärmeleitungselemente (16) zur Abfuhr thermischer Energie aus der Wand (7) des Plastifizierzylinders (1) hin angeordnet sind,
**dadurch gekennzeichnet, dass**
- die Wärmeleitungselemente als Wärmeleitungsstäbe (16) aus einem gegenüber der Wärmeleitfähigkeit der Wand (7) des Plastifizierzylinders (1) thermisch besser leitfähigen Material ausgebildet sind.

2. Kunststoffverarbeitungsmaschine nach Anspruch 1, **dadurch gekennzeichnet, dass** die Gebläse-Luftkühleinrichtung (11) mindestens einen der Einfüllzone (3) zugeordneten Ventilator (15) aufweist.

3. Kunststoffverarbeitungsmaschine nach Anspruch 1 oder 2, **dadurch gekennzeichnet, dass** in der Einfüllzone (3) ein um den Plastifizierzylinder (1) angeordnetes Kühlrippen-Paket (12) vorgesehen ist, das vom Luftstrom (A) der Gebläse-Luftkühleinrichtung (11) beaufschlagt wird.

4. Kunststoffverarbeitungsmaschine nach einem der vorgenannten Ansprüche, **dadurch gekennzeichnet, dass** die Wärmeleitungselemente (1) mit ihren über die Wand (7) hinausragenden Enden (29) mit einem Kühlkörper (18) verbunden sind, der vom Luftstrom (A) der Gebläse-Luftkühleinrichtung (11) beaufschlagt wird.

5. Kunststoffverarbeitungsmaschine nach einem der vorgenannten Ansprüche, **dadurch gekennzeichnet, dass** die Wärmeleitungsstäbe (16) in längsaxialer Richtung (L) des Plastifizierzylinders (1) aneinandergereiht, zwei diametral gegenüberliegende Wandzonen (W1, W2) sehnenartig schneidend in Aufnahmebohrungen (17) in der Wand (7) des Plastifizierzylinders (1) eingebettet sind.

6. Kunststoffverarbeitungsmaschine nach einem der vorgenannten Ansprüche, **dadurch gekennzeichnet, dass** die Gebläse-Luftkühleinrichtung (11) zwei beiderseits der Einfüllzone (3) diametral gegenüberliegende Ventilatoren (15) aufweist, die eine quer zur längsaxialen Richtung (L) des Plastifizierzylinders (1) gerichtete Kühlluftströmung (A) erzeugen.

7. Kunststoffverarbeitungsmaschine nach einem der vorgenannten Ansprüche, **dadurch gekennzeichnet, dass** die Einfüllzone (3) des Plastifizierzylinders (1) über ein durch die Gebläse-Luftkühleinrichtung (11) verlaufendes Koppelrohr (20) mit einem Einfülltrichter (9) für das zu einzufüllende Kunststoffmaterial verbunden ist.

8. Kunststoffverarbeitungsmaschine nach einem der vorgenannten Ansprüche, **dadurch gekennzeichnet, dass** die Gebläse-Luftkühleinrichtung (11) in einem um die Einfüllzone (3) des Plastifizierzylinders (1) herum angeordneten Gehäuse (23) untergebracht ist.

## Claims

1. Plastic processing machine, in particular injection molding machine, with a plasticizing cylinder (1), comprising
- an inlet area (3) in which the plastic material to be plasticized is introduced in the interior (10) of the plasticizing cylinder (1),
- a plasticizing area (4) adjoining the inlet area (3),
- a temperature control device (11), arranged in the region of the inlet area (3), for the plastic material to be fed, and
- a heating device (6), arranged in the region of the plasticizing area (4), for the plastic material,
- wherein the temperature control device of the inlet area (3) is configured as an air blast cooling unit (11), and
- wherein in the wall (7) of the plasticizing cylinder (1), heat conduction members (16) are arranged in the region of the inlet area (3) to dissipate thermal energy from the wall (7) of the plasticizing cylinder (1),
**characterized in that**
- the heat conduction members are configured as heat conduction rods (16) made of a material, which possesses a thermal conductivity that is better than the thermal conductivity of the wall (7) of the plasticizing cylinder (1).

2. Plastic processing machine as claimed in claim 1, **characterized in that** the air blast cooling unit (11) has at least one fan (15) associated to the inlet area (3).

3. Plastic processing machine as claimed in claim 1 or 2, **characterized in that** in the inlet area (3), a cooling rib package (12) is provided, which is arranged around the plasticizing cylinder (1) and is impinged by the air flow (A) of the air blast cooling unit (1).

4. Plastic processing machine as claimed in any one of the preceding claims, **characterized in that** the heat conduction members (1) are connected, with their ends (29) protruding beyond the wall (7), to a cooling body (18), which is impinged by the air flow (A) of the air blast cooling unit (11).

5. Plastic processing machine as claimed in any one of the preceding claims, **characterized in that** the heat conduction rods (16) are embedded in receiving bores (17) in the wall (7) of the plasticizing cylinder (1) in such a way as to be arranged in rows extending in an axial longitudinal direction (L) of the plasticizing cylinder (1) and intersecting two diametrically opposed wall areas (W1, W2) in the manner of a chord.

6. Plastic processing machine as claimed in any one of the preceding claims, **characterized in that** the air blast cooling device (11) has two diametrically opposed fans (15) on both sides of the inlet area (3), the fans (15) producing a cooling air flow (A) directed transversely to the axial longitudinal direction (L) of the plasticizing cylinder (1).

7. Plastic processing machine as claimed in any one of the preceding claims, **characterized in that** the inlet area (3) of the plasticizing cylinder (1) is connected, via a coupling pipe (20) running through the air blast cooling unit (11), to a feed hopper (9) for the plastic material to be fed.

8. Plastic processing machine as claimed in any one of the preceding claims, **characterized in that** the air blast cooling device (11) is accommodated in a housing (23) arranged around the inlet area (3) of the plasticizing cylinder (1).

## Revendications

1. Machine de transformation du plastique, en particulier machine de moulage par injection, avec un cylindre de plastification (1) comprenant
- une zone de remplissage (3) dans laquelle la matière plastique à plastifier al est introduit à l'intérieur (10) du cylindre de plastification (1),
- une zone de plastification (4) qui suit la zone de remplissage (3),
- un dispositif de revenu (11) disposé dans la zone de remplissage (3) pour le matériau plastique à remplir, et un dispositif de chauffage (6) de la matière plastique disposé dans la zone de la zone de plastification (4),
- dans lequel est formée la trempe de la zone de remplissage (3) en tant que dispositif de refroidissement d'air par soufflage (11), et
- dans lequel dans la paroi (7) du cylindre de plastification (1) dans la région de une zone de remplissage (3) des éléments de conduction thermique (16) sont agencés pour dissiper l'énergie thermique de la paroi (7) du cylindre de plastification (1),
**caractérisé en ce que**
- les éléments thermoconducteurs sous forme de tiges thermoconductrices (16) provenant d'un en face de la conductivité thermique de la paroi (7) du cylindre de plastification (1), un matériau thermiquement mieux conducteur est formé.

2. Machine de traitement de matières plastiques selon la revendication
1, **caractérisée en ce que** le dispositif de refroidissement d'air par soufflante (11) présente au moins une la zone de remplissage (3) associée au ventilateur (15).

3. Machine de traitement de plastique selon la revendication 1 ou 2, **caractérisé en ce que,** dans la zone de remplissage (3), il est prévu un emballage d'ailettes de refroidissement (12) agencé par le flux d'air (A) du dispositif de refroidissement à air soufflé (11) dans un cylindre de plastification (1)

4. Machine de traitement de matières plastiques selon l'une des revendications précédentes, **caractérisée en ce que** les éléments conducteurs de chaleur (1) avec leurs extrémités saillantes (29) au-dessus de la paroi (7) sont reliés à un puits de chaleur (18), qui est sollicité par le flux d'air (A) du dispositif de refroidissement d'air de la soufflante (11).

5. Machine de traitement en plastique selon l'une des précédentes revendications **caractérisé en ce que** les tiges de conduction thermique (16) dans la direction axiale longitudinale (L) du cylindre de plastification (1) sont liées, deux zones de paroi diamétralement opposées (W1, W2) en forme de corde dans les trous de réception (17) de la paroi (7) du plasma cylindre de tifizier (1) sont incorporés.

6. Machine de traitement de matières plastiques selon l'une des revendications précédentes, **caractérisée en ce que** le dispositif de refroidissement par ventilateur-air (11) est situé de part et d'autre de la zone de remplissage (3) diamétralement ventilateurs opposés (15) qui produisent une direction transversale par rapport à la direction axiale longitudinale (L) du flux d'air de refroidissement dirigé (A) plastifiant (1).

7. Machine de traitement de matière plastique selon l'une des revendications précédentes, **caractérisée en ce que** la zone de remplissage (3) du cylindre de plastification (1) passe par un dispositif de refroidissement à air par soufflante (11) prolongeant un tube de raccordement (20) avec une trémie (9) pour matière plastique à remplir est connecté.

8. Machine de traitement de matières plastiques selon l'une des revendications précédentes, **caractérisée en ce que** le dispositif de refroidissement par air soufflant (11) est logé dans un remplissage autour de la zone de rinçage (3) du cylindre de plastification (1) agencé autour du boîtier (23).
